# EUROPÄISCHE PATENTSCHRIFT

(11) **EP 1 810 854 B1**
(45) Veröffentlichungstag und Bekanntmachung des Hinweises auf die Patenterteilung: **17.02.2010**
(21) Anmeldenummer: 06021690.0
(22) Anmeldetag: 17.10.2006
(51) Int. Cl.: B60G 21/055, F16F 1/38

(54) **Lagerelement für einen Stabilisator eines Kraftfahrzeugs**
Bearing element for vehicle stabiliser bar
Palier de fixation pour une barre anti-devers d'un véhicule

(30) Priorität: 20.01.2006 DE 102006002749
(43) Veröffentlichungstag der Anmeldung: 25.07.2007
(73) Patentinhaber: Dr. Ing. h.c. F. Porsche Aktiengesellschaft, 70435 Stuttgart (DE)
(72) Erfinder: Germano, Francesco, 74321 Bietigheim-Bissingen (DE); Schulz, Achim, 75223 Niefern-Oeschelbronn (DE)

(56) Entgegenhaltungen:
- EP-A1- 0 405 109
- EP-A1- 0 547 945
- EP-A2- 0 381 945
- EP-A2- 1 254 793
- DE-C1- 10 018 776
- GB-A- 1 516 572
- JP-A- 3 272 315
- JP-A- 2002 002 249

## Beschreibung

Die vorliegende Erfindung betrifft ein Lagerelement für einen Stabilisator eines Kraftfahrzeuges gemäß dem Oberbegriff des Anspruchs 1.

Aus der DE 199 45 044 A1 ist eine Lagerung zur Verhinderung einer Seitenverschiebung eines Stabilisators bekannt. Zur seitlichen Fixierung des Stabilisators wird ein Klebstoff mit einem zur zusätzlichen Vulkanisierung geeigneten Additiv auf eine Innenfläche einer Gummihülse aufgebracht, die an wenigstens einer Stelle eingeschnitten ist, um an dem Stabilisator befestigt werden zu können. Dabei liegt die Innenhülse an der Außenfläche eines Festteils des Stabilisators an. Die Außenfläche der Innenhülse ist bevorzugt mit einer Schelle auf dem Stabilisator befestigt, wobei die Innenhülse und die Schelle erwärmt werden, um die Innenhülse auf die Außenfläche des Festteils des Stabilisators zu verkleben. Hierdurch wird eine erhebliche Fixierkraft gegen Belastung in seitlicher Richtung erzeugt, so dass eine Seitenverschiebung des Stabilisators verhindert werden kann. Die Fixierung der Lagerung am Stabilisator erfolgt dabei ausschließlich über den genannten Klebstoff, welcher wie alle Klebstoffe einem natürlichen Alterungsprozess unterworfen ist und dadurch die Fixierkraft im Laufe der Zeit nachlässt.

Aus der EP 0 547 945 A1 ist ein weiteres Lagerungselement für einen Stabilisator bekannt, wobei das Lagerungselement eine elastische Lagerung des Stabilisators an einem fahrzeugfesten Teil ermöglichen soll. Erreicht wird dies beispielsweise durch einen den Stabilisator umfangsmäßig umschließenden, elastischen Ring, welcher über Schellen am Fahrzeug befestigt wird.

Aus der DE 39 21 457 C2 ist ein Torsionsstab für Kraftfahrzeuge mit endseitig abgewinkelten Schenkeln zum Anschluss an tragende Teile des Kraftfahrzeuges bekannt. Dabei ist zwischen den Schenkeln ein auf den Torsionsstab aufgeschobenes und mit diesem verbundenes Lager vorgesehen, das gegen ein eine Axialbewegung zwischen Lager und Torsionsstab verhinderndes Widerlager abstützbar ist und wobei das Widerlager formschlüssig auf dem Torsionsstabfestgelegt ist. Um den Formschluss zu verwirklichen, sind ein oder mehrere als Erhebungen ausgebildete Rastelemente örtlich am Innenumfang der Bohrung des Widerlagers vorgesehen, die in entsprechende im Torsionsstab vorgesehene Vertiefungen eingreifen. Dies bietet jedoch den Nachteil, dass der Torsionsstab im Bereich der Vertiefungen in seinem Querschnitt geschwächt ist.

Aus der DE-C-100 18 776 ist ein Lagerelement für einen Stabilisator eines Kraftfahrzeugs bekannt, wobei das Lagerelement zwei Halbschalen aufweist, wovon jede eine Innenschale und eine Außenschale aufweist, welche über eine zwischen der jeweiligen Innenschale und der zugehörigen Außenschale angeordnete, elastische Zwischenschicht miteinander verbunden sind; und wobei die Innenschalen im montierten Zustand kraftschlüssig mit dem Stabilisator verbunden sind, und die Außenschalen im montierten Zustand kraftschlüssig mit dem Kraftfahrzeug verbunden sind; und wobei die elastische Zwischenschicht nur über einen Teil der Axialerstreckung des Lagerelementes verläuft, wobei die Innenschalen jeweils ein axial benachbart zur Zwischenschicht angeordneter Endbereich aufweisen, welcher komplementär zu einem am Stabilisator abstehend angeordneten Kragen ausgebildet ist, wobei die Endbereiche in montiertem Zustand einen Innenmehrkant bilden und der Kragen als komplementär dazu ausgebildeter Außenmehrkant ausgebildet ist.

Die GB 15 16 572 A offenbart ein Gelenklager zur Lagerung von Stabilisatoren mit zwei äußeren, ein Aufnahmeauge bildenden Lagerhalbschalen, mit zwei im Aufnahmeauge zusammengespannten Gummi-Metall-Schalen, bestehend aus je einer Gummi-Halbschale und darauf innen und außen festhaftend aufvulkanisierten Metallschalen, wobei die äußeren Metallschalen Halbschalen sind, die vor dem Zusammenspannen konzentrisch zu den inneren Metallschalen liegen, wobei zwischen den Gummi-Halbschalen eine Längskerbe gebildet ist, und wobei auch die innere Metallschale aus zwei Halbschalen gebildet ist.

Die EP 0 381 945 A2 beschreibt eine Gummi-Metall-Buchse für die Lagerung eines Stabilisatorstabes an einem Kraftfahrzeug mit äußeren, zusammenspannbaren Lagerhalbschalen, die ein Aufnahmeauge bilden und mit zwei im Aufnahmeauge zusammenspannbaren Gummi-Metall-Halbschalen, wobei eine dünne Gummischicht vorgesehen ist, die an zwei sich gegenüberliegenden Längsrändern der inneren Metall-Halbschalen von einer Gumi-Metall-Halbschale zur anderen durchgehend verläuft, so dass die beiden Gummi-Metall-Halbschalen einseitig zusammenhängen und an der durchgehenden dünnen Gummischicht ein Gummi-Filmscharnier gebildet ist, an dem die beiden Gummi-Metall-Halbschalen aufklappbar sind.

Aus der EP 0 405 109 A1 ist ein Stabilisator bekannt, welcher in einem Lager aufgenommen ist, das gegen ein eine Axialbewegung zwischen Lager und Stabilisator verhinderndes Widerlager abstützbar ist. Das Wiederlager ist über eine Formschlussverbindung mit dem Stabilisator fest verbunden.

Die vorliegende Erfindung beschäftigt sich mit dem Problem, für ein Lagerelement für einen Stabilisator eingangs erwähnter Art eine verbesserte Ausführungsform anzugeben, welches einerseits eine leichte Montage erlaubt und andererseits eine zuverlässige Lagerung des Stabilisators am Kraftfahrzeug ermöglicht, wobei der Stabilisator Sowohl in axialer Richtung als auch in radialer Richtung fixiert werden kann.

Dies Problem wird erfindungsgemäß durch den Gegenstand des unabhängigen Anspruchs 1 gelöst. Vorteilhafte Ausführungsformen sind Gegenstand der abhängigen Ansprüche.

Die Erfindung beruht auf dem allgemeinen Gedanken, ein Lagerelement für einen Stabilisator eines Kraftfahrzeugs aus zwei Halbschalen auszubilden, welche in einfacher Weise in radialer Richtung auf den Stabilisator aufgebracht und mit diesem verbunden werden können und wobei jede der beiden Halbschalen jeweils eine Innenschale und eine Außenschale aufweist, zwischen welchen eine elastische Zwischenschicht angeordnet ist, die einerseits die jeweilige Außenschale mit der jeweils zugehörigen Innenschale verbindet und die andererseits eine gewisse elastische, das heißt federnde, Torsionsbewegung zwischen der jeweiligen Innenschale und der zugehörigen Außenschale zulässt. Durch die Ausbildung des Lagerelementes mit zwei Halbschalen lässt sich die Montage des Lagerelementes deutlich vereinfachen, wodurch der Montageaufwand und die damit verbundenen Montagekosten gesenkt werden können. Durch die Anordnung der elastischen Zwischenschicht zwischen der jeweiligen Außenschale und der zugehörigen Innenschale wird darüber hinaus eine elastische aber zugleich zuverlässige Lagerung des Stabilisators am Kraftfahrzeug erreicht.

Erfindungsgemäß weisen die Innenschalen jeweils eine zum Stabilisator hin offene Ausnehmung auf, welche komplementär zu einem am Stabilisator abstehend angeordneten Kragen ausgebildet ist.

Dabei ist vorgesehen, dass die Ausnehmung im montierten Zustand einen Innenmehrkant, beispielsweise einen Innensechskant, bildet und der Kragen als passender, d.h. komplementär dazu ausgebildeter Außenmehrkant, beispielsweise Außensechskant, ausgebildet ist. Durch die Ausnehmung, kann eine form- und kraftschlüssige Verbindung der jeweiligen Innenschalen mit dem Stabilisator erreicht werden, wobei darüber hinaus denkbar ist, dass der Kragen und die zugehörigen Ausnehmungen so ausgebildet sind, dass sich lediglich eine mögliche Montageposition ergibt, wodurch eine Falschmontage des Lagerelements am Stabilisator vermieden werden kann. Mit dem abstehend am Stabilisator angeordneten Kragen kann darüber hinaus ein Drehmoment des Stabilisators auf das Lagerelement bzw. die Innenschalen des Lagerelements übertragen werden, welche die Drehbewegung an die elastische Zwischenschicht weiterleiten. Die elastische Zwischenschicht erlaubt eine Verdrehung der Innenschalen bezüglich der beiden Außenschalen, so dass das Lagerelement eventuelle Drehbewegungen des Stabilisators ausgleichen kann. Darüber hinaus kann der Stabilisator über seinen abstehend angeordneten Kragen, der in die Ausnehmungen der beiden Innenschalen formschlüssig eingreift, sowohl in axialer Richtung als auch in radialer Richtung fixiert werden. Insbesondere eine axiale Fixierung ist bei herkömmlichen Lagerelementen für Stabilisatoren schwierig zu bewerkstelligen.

Zweckmäßig ist die elastische Zwischenschicht aus Kunststoff oder aus Gummi ausgebildet und mit der jeweiligen Außenschale einerseits und der jeweiligen Innenschale andererseits beispielsweise durch Anvulkanisieren oder Ankleben oder Anschweißen oder Anspritzen mechanisch verbunden. Sowohl Gummi als auch Kunststoffe sind günstige und erprobte Werkstoffe, welche sich mit den erwähnten Verfahren fertigungstechnisch einfach und kostengünstig mit anderen Bauteilen verbinden lassen.

Erfindungsgemäß ist ein Spannelement vorgesehen, welches die beiden Innenschalen des Lagerelements in Bereich der zum Stabilisator (2) hin offenen Ausnehmung (8) umschließt und gegen den Stabilisator vorspannt. Ein derartiges Spannelement kann beispielsweise in Form einer Schelle, insbesondere einer handelsüblichen Schlauchschelle, ausgebildet sein und sichert dadurch zuverlässig den Halt der beiden Innenschalen des Lagerelements am Stabilisator und lässt sich zudem einfach anbringen bzw. wieder lösen. Gleichzeitig bietet eine derartige Spannschelle den großen Vorteil, dass es sich um ein kostengünstiges Befestigungselement handelt, welches in nahezu beliebiger Ausführungsform erhältlich ist. Um das Spannelement hinsichtlich seiner Lage bezüglich der beiden Innenschalen des Lagerelements fixieren zu können, kann vorgesehen sein, dass die jeweiligen Innenschalen im Bereich der zum Stabilisator hin offenen Ausnehmung außen eine Nut aufweisen, in welcher das Spannelement die beiden Innenschalen des Lagerelements umfassend angeordnet ist. Eine derartige Nut kann beispielsweise eine gleich große oder minimal größere Breite wie das Spannelement aufweisen, so dass dieses passgenau in der Nut angeordnet werden kann. Eine derartige Nut erleichtert zusätzlich die Montage des Spannelements und fixiert dieses bezüglich seiner Lage zu den beiden Innenschalen des Lagerelements auch in den Fällen, in denen das Spannelement nicht allein durch seine Spannkraft in Lage gehalten wird.

Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine stark schematisierte Darstellung eines erfindungsgemäßen Lagerelements an einem Stabilisator eines Kraftfahrzeugs,
- Fig. 2: eine Halbschale des erfindungsgemäßen Lagerelements.

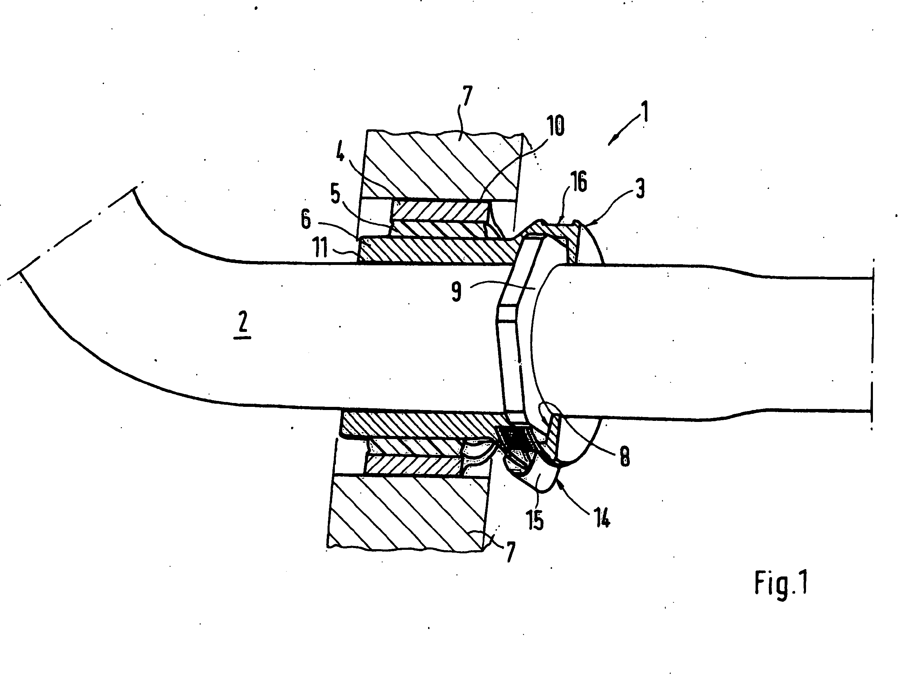

Entsprechend Fig. 1 weist ein erfindungsgemäßes Lagerelement 1 für einen Stabilisator 2 eines nicht gezeigten Kraftfahrzeugs zwei Halbschalen 3, 3' auf, wobei in Fig. 1 lediglich die eine Halbschale 3 dargestellt ist. Der Stabilisator 2 ist Teil eines nicht dargestellten Federungs-Stoßdämpferungssystems und bewirkt einen Ausgleich zweier Fahrzeugräder bezüglich deren Ein- bzw. Ausfederweg. Wie in Fig. 1 gezeigt, ist die Halbschale des Lagerelements 1 mehrschalig aufgebaut, wobei eine Außenschale 4 über eine Zwischenschicht 5 mit einer Innenschale 6 elastisch verbunden ist. Die Außenschale 4 und die Innenschale 6 der jeweiligen Halbschale 3 bzw. 3' können dabei aus rostfreien Metall, insbesondere aus Aluminium, ausgebildet sein, welches zudem ein geringes Gewicht aufweist, was insbesondere bei Sportwagen von großem Vorteil ist. Denkbar sind natürlich auch andere metallische Werkstoffe und/oder Kunststoffe.

Fig. 1 zeigt das Lagerelement 1 in am Stabilisator 2 montiertem Zustand, wobei die Innenschale 6 der Halbschale 3 form- und/oder kraftschlüssig mit dem Stabilisator 2 verbunden ist, und die Außenschale 4 form- und/oder kraftschlüssig mit einem Karosseriebauteil 7 des Kraftfahrzeugs verbunden ist. Der Form- bzw. Kraftschluss der Innenschale 6 mit dem Stabilisator 2 erfolgt über eine zum Stabilisator 2 hin offene Ausnehmung 8, welche komplementär zu einem am Stabilisator 2 abstehend angeordneten Kragen 9 ausgebildet ist. Dabei bildet die Ausnehmung 8 in jeder Halbschale 3 und 3' vorzugsweise einen Innenmehrkant, insbesondere einen Innensechskant, während der Kragen 9 als dazu komplementär ausgebildeter Außenmehrkant, insbesondere Außensechskant, ausgebildet ist. Im Beispiel gemäß Fig. 1 ist der Kragen 9 als Außenzwölfkant ausgebildet, während die Ausnehmung 8 an der Halbschale 3 als Innenzwölfkant ausgebildet ist. Denkbar ist aber auch, dass die Ausnehmung 8 der Halbschale 3 als Innensechskant ausgebildet ist und der Außenmehrkant die in Fig. 1 gezeigte Form aufweist, so dass ebenfalls eine kraftschlüssige Verbindung zwischen Kragen 9 und Ausnehmung 8 der Innenschalen 3 und 3' gegeben ist. Generell ist hierbei der Kragen 9 am Stabilisator 2 angeformt, beispielsweise durch Stauchen, wobei auch denkbar ist, dass am Stabilisator 2 ein Kragen 9 nachträglich angeordnet und mit dem Stabilisator 2 fest verbunden wird.

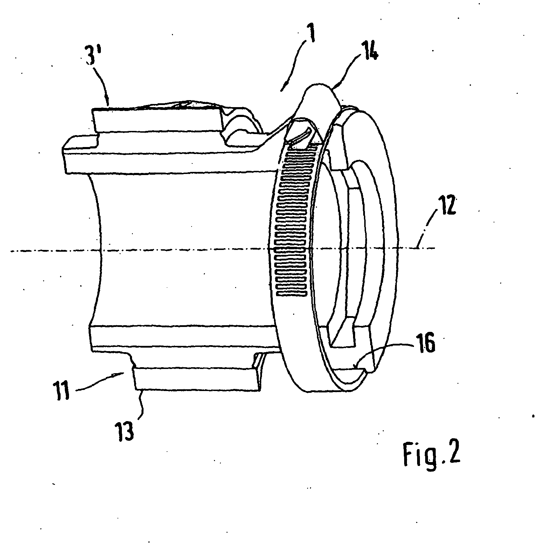

Vorzugsweise ist die Ausnehmung 8 derart an den Kragen 9 angepasst, dass sich lediglich eine mögliche Montageposition der beiden Innenschalen 6 des Lagerelements 1 ergibt, so dass eine Falschmontage des Lagerelements 1 am Stabilisator 2 ausgeschlossen werden kann. Darüber hinaus ist die gemäß in Fig. 1 und 2 gezeigte Ausführungsform des Lagerelements 1 lediglich rein exemplarisch zu verstehen, so dass auch andere Ausführungsformen, die zwei Halbschalen 3, 3' aufweisen und wobei jede Halbschale 3, 3' jeweils eine Außenschale 4, eine Zwischenschicht 5 und eine Innenschale 6 aufweist, von der Erfindung umschlossen sein sollen.

Ähnlich wie die Ausnehmung 8 der Innenschale 6 der Halbschale 3 eine kraft- bzw. formschlüssige Verbindung mit dem Kragen 9 eingeht, so kann auch eine entsprechende nicht gezeigte Außenkontur an einer Außenfläche 10 der Außenschale 4 vorgesehen sein, welche mit komplementär dazu ausgebildeten Gegeninnenkonturen am Karosseriebauteil 7 zusammenwirkt. Denkbar ist hierbei insbesondere, dass an einer Trennfläche 11 der beiden Halbschalen 3 und 3' eine radial zur Lagerelementachse 12 nach außen abstehende Kontur 13 angeformt ist, welche in eine nicht gezeigte an dem Karosseriebauteil 7 ausgeformte Gegenkontur zur Drehsicherung eingreift.

Die elastische Zwischenschicht 5, welche beispielsweise aus Kunststoff oder aus Gummi ausgebildet ist, erlaubt eine Verdrehung der Innenschale 6 bezüglich der Außenschale 4. Die Zwischenschicht 5 ist dabei so ausgebildet, dass sie sich bei normal auftretenden Drehmomenten weder von der Außenschale 4 noch von der Innenschale 6 löst. Eine Verbindung der Zwischenschicht 5 mit der jeweils zugehörigen Außenschale 4 bzw. Innenschale 6 der jeweiligen Halbschale 3 oder 3' kann dabei beispielsweise mittels Vulkanisieren oder Kleben oder Schweißen oder Anspritzen erfolgen. Alle diese Verfahren sind geeignet, die elastische Zwischenschicht 5 zuverlässig sowohl mit der Außenschale 4 als auch mit der Innenschale 6 dauerhaft zu verbinden.

Gemäß den Fig. 1 und 2 verläuft die elastische Zwischenschicht 5 nur über einen Teil der Axialerstreckung des Lagerelements 1, wobei die zum Stabilisator 2 hin offene Ausnehmung 8 an der jeweiligen Innenschale 6 der jeweiligen Halbschale 3, 3' axial benachbart zur Zwischensicht 5 angeordnet ist. Darüber hinaus weist die jeweilige Außenschale 4 der jeweiligen Halbschale 3, 3' im wesentlichen dieselbe Axialerstreckung auf wie die zugehörige elastische Zwischenschicht 5. Denkbar ist auch, dass die elastische Zwischenschicht 5 bezüglich ihrer radialen Dicke oder ihrer axialen Längserstreckung an jeweilige Anforderungen angepasst ist, d.h. bei hohen aufzunehmenden Drehmomenten eine größer axiale Längserstreckung aufweist, als bei kleineren aufzunehmenden Drehmomenten. Insgesamt wirkt die elastische Zwischenschicht 5 wie eine Drehfeder, welche dem auf die Innenschalen 6 vom Stabilisator 2 übertragenen Drehmoment entgegenwirkt.

Zur Befestigung des Lagerelements 1 am Stabilisator 2 ist ein Spannelement 14 vorgesehen, welches die beiden Innenschalen 6 des Lagerelements 1 umgreift bzw. umschließt und gegen den Stabilisator 2 verspannt. Als Spannelement 14 kann beispielsweise eine Schelle 15, insbesondere eine Schlauchschelle, eingesetzt werden, welche zum einen die erforderliche Spannkraft problemlos aufzubringen vermag und zum anderen kostengünstig ist. Um das Spannelement 14 bezüglich seiner Lage zu den Innenschalen 6 zu fixieren, kann vorgesehen sein, dass die jeweiligen Innenschalen 6 im Bereich der zum Stabilisator 2 hin offenen Ausnehmung 8 außen eine in Umfangsrichtung verlaufende Nut 16 aufweisen. Diese Nut 16 hat dabei vorzugsweise eine geringfügig größere Breite als das Spannelement 14, so dass dieses passgenau in der Nut 16 eingreifen kann. Wie in den Fig. 1 und 2 gezeigt ist das Spannelement 14 im Bereich der zum Stabilisator 2 hin offenen Ausnehmung 8 außen an den Innenschalen 6 in der dortigen Nut 16 angeordnet. Zum Verspannen der Innenschalen 6 gegen den Stabilisator 2 wird die Schelle 15 mittels eines Schraubenziehers derart gespannt, dass sich ihr Umfang verkürzt und sie dadurch eine Verpressung der Innenschalen 6 gegen den Stabilisator 2 bewirkt.

Durch das erfindungsgemäße Lagerelement 1 kann eine besonders einfache und schnelle Montage desselben am Stabilisator 2 erreicht werden und zugleich ist das erfindungsgemäße Lagerelement 1 kostengünstig herzustellen. Eine Übertragung von Schwingungen entweder vom Karosseriebauteil 7 auf den Stabilisator 2 und umgekehrt wird durch die elastische Zwischenschicht 5 wirkungsvoll unterbunden, wobei die elastische Zwischenschicht 5 weiter den Vorteil aufweist, dass sie gewisse Verdrehungen des Stabilisators 2 aufnehmen kann, ohne dass sich die Innenschalen 6 vom Stabilisator 2 oder die Außenschalen 4 vom Karosseriebauteil 7 lösen.

## Patentansprüche

1. Lagerelement (1) für einen Stabilisator (2) eines Kraftfahrzeugs,
insbesondere eines Federungs-Stoßdämpfungssystems, wobei das Lagerelement (1) zwei Halbschalen (3, 3') aufweist, wovon jede eine Innenschale (6) und eine Außenschale (4) aufweist, welche über eine zwischen der jeweiligen Innenschale (6) und der zugehörigen Außenschale (4) angeordnete, elastische Zwischenschicht (5) miteinander verbunden sind, wobei die Innenschalen (6) im montierten Zustand form- und/oder kraftschlüssig mit dem Stabilisator (2) verbunden sind, und/oder die Außenschalen (4) im montierten Zustand form- und/oder kraftschlüssig mit dem Kraftfahrzeug verbunden sind, wobei die elastische Zwischenschicht (5) nur über einen Teil der Axialerstreckung des Lagerelementes (1) verläuft, wobei die Innenschalen (6) jeweils eine zum Stabilisator (2) hin offene Ausnehmung (8) aufweisen, welche komplementär zu einem am Stabilisator (2) abstehend angeordneten Kragen (9) ausgebildet ist, wobei die Ausnehmungen (8) in montiertem Zustand einen Innenmehrkant, insbesondere einen Innensechskant, bilden, wobei der Kragen (9) als komplementär dazu ausgebildeter Außenmehrkant, insbesondere Außensechskant, ausgebildet ist, wobei die zum Stabilisator (2) hin offene Ausnehmung (8) an der jeweiligen Innenschale (6) axial benachbart zur Zwischenschicht (5) angeordnet ist, und wobei ein Spannelement (14) vorgesehen ist, welches die beiden Innenschalen (6) des Lagerelementes (1) im Bereich der zum Stabilisator (2) hin offenen Ausnehmung (8) umschließt und gegen den Stabilisator (2) verspannt.

2. Lagerelement nach Anspruch 1, **dadurch gekennzeichnet, dass**
die jeweilige Außenschale (4) im wesentlichen dieselbe Axialerstreckung aufweist wie die elastische Zwischenschicht (5).

3. Lagerelement nach Anspruch 1 oder 2, **dadurch gekennzeichnet, dass**
die elastische Zwischenschicht (5) aus Kunststoff oder Gummi ausgebildet ist.

4. Lagerelement nach einem der Ansprüche 1 bis 3, **dadurch gekennzeichnet, dass**
die elastische Zwischenschicht (5) einerseits an die jeweilige Außenschale (4) und andererseits an die jeweilige Innenschale (6) anvulkanisiert oder angeklebt oder angeschweißt oder angespritzt ist.

5. Lagerelement nach einem der Ansprüche 1 bis 4, **dadurch gekennzeichnet, dass**
die Innenschalen (6) und/oder die Außenschalen (4) aus Aluminium ausgebildet sind.

6. Lagerelement nach einem der Ansprüche 1 bis 5, **dadurch gekennzeichnet, dass**
die jeweiligen Innenschalen (6) im Bereich der zum Stabilisator (2) hin offenen Ausnehmung (8) außen eine Nut (16) aufweisen.

7. Lagerelement nach einem der Ansprüche 1 bis 6, **dadurch gekennzeichnet, dass**
das Spannelement (14) im Bereich der zum Stabilisator (2) hin offenen Ausnehmung (8) außen an den Innenschalen (6) oder in der dortigen Nut (16) angeordnet ist.

8. Lagerelement nach einem der Ansprüche 1 bis 7, **dadurch gekennzeichnet, dass**
**dass** das Spannelement (14) als Schelle (15) ausgebildet ist.

## Claims

1. Mounting element (1) for a stabilizer (2) of a motor vehicle, in particular of a suspension shock absorbing system, with the mounting element (1) having two half shells (3, 3') which each have one inner shell (6) and one outer shell (4) which are connected to one another by means of an elastic intermediate layer (5) arranged between the respective inner shell (6) and the associated outer shell (4), with the inner shells (6) being connected to the stabilizer (2) in a positively locking and/or non-positively locking fashion in the assembled state and/or the outer shells (4) being connected to the motor vehicle in a positively locking and/or non-positively locking fashion in the assembled state, with the elastic intermediate layer (5) running only over a part of the axial extent of the mounting element (1), with the inner shells (6) each having a recess (8) which is open in the direction of the stabilizer (2) and which is of complementary design to a collar (9) arranged in a projecting fashion on the stabilizer (2), with the recesses (8) forming, in the assembled state, an internal polygon, in particular an internal hexagon, with the collar (9) being formed as a complementary external polygon, in particular external hexagon, with the recess (8), which is open in the direction of the stabilizer (2), of the respective inner shell (6) being arranged axially adjacent to the intermediate layer (5), and with a clamping element (14) being provided which surrounds the two inner shells (6) of the mounting element (1), and clamps said inner shells (6) against the stabilizer (2), in the region of the recess (8) which is open in the direction of the stabilizer (2).

2. Mounting element according to Claim 1, **characterized in that** the respective outer shell (4) has substantially the same axial extent as the elastic intermediate layer (5).

3. Mounting element according to Claim 1 or 2, **characterized in that** the elastic intermediate layer (5) is formed from plastic or rubber.

4. Mounting element according to one of Claims 1 to 3, **characterized in that** the elastic intermediate layer (5) is vulcanized or adhesively bonded or welded or sprayed at one side onto the respective outer shell (4) and at the other side onto the respective inner shell (6).

5. Mounting element according to one of Claims 1 to 4, **characterized in that** the inner shells (6) and/or the outer shells (4) are formed from aluminium.

6. Mounting element according to one of Claims 1 to 5, **characterized in that** the respective inner shells (6) have a groove (16) at the outside in the region of the recess (8) which is open in the direction of the stabilizer (2).

7. Mounting element according to one of Claims 1 to 6, **characterized in that** the clamping element (14) is arranged at the outside on the inner shells (6), or in the groove (16) provided there, in the region of the recess (8) which is open in the direction of the stabilizer (2).

8. Mounting element according to one of Claims 1 to 7, **characterized in that** the clamping element (14) is embodied as a clip (15).

## Revendications

1. Palier de fixation (1) pour une barre anti-dévers (2) d'un véhicule automobile, en particulier d'un système d'amortissement à suspension, dans lequel le palier de fixation (1) présente deux demi-coquilles (3, 3'), dont chacune comprend une coquille intérieure (6) et une coquille extérieure (4), qui sont assemblées l'une à l'autre par une couche intermédiaire élastique (5), disposée entre la coquille intérieure respective (6) et la coquille extérieure correspondante (4), dans lequel les coquilles intérieures (6) à l'état monté sont assemblées en complémentarité de forme et/ou de force à la barre anti-dévers (2), et/ou les coquilles extérieures (4) à l'état monté sont assemblées en complémentarité de forme et/ou de force au véhicule automobile, dans lequel la couche intermédiaire élastique (5) ne s'étend que sur une partie de l'extension axiale du palier de fixation (1), dans lequel les coquilles intérieures (6) présentent chacune un évidement (8) ouvert vers la barre anti-dévers (2) et qui présente une forme complémentaire à un collet (9) disposé en saillie sur la barre anti-dévers (2), dans lequel les évidements (8) à l'état monté forment un polygone intérieur, en particulier un hexagone intérieur, dans lequel le collet (9) présente un polygone extérieur, en particulier un hexagone extérieur, de forme complémentaire à celui-ci, dans lequel l'évidement (8) de la coquille intérieure respective (6), ouvert vers la barre anti-dévers (2), est disposé axialement à proximité de la couche intermédiaire (5), et dans lequel il est prévu un élément de serrage (14), qui entoure les deux coquilles intérieures (6) du palier de fixation (1) dans la région de l'évidement (8) ouvert vers la barre anti-dévers (2) et les serre contre la barre anti-dévers (2) .

2. Palier de fixation selon la revendication 1, **caractérisé en ce que** la coquille extérieure respective (4) présente essentiellement la même extension axiale que la couche intermédiaire élastique (5).

3. Palier de fixation selon la revendication 1 ou 2, **caractérisé en ce que** la couche intermédiaire élastique (5) est composée de plastique ou de caoutchouc.

4. Palier de fixation selon l'une quelconque des revendications 1 à 3, **caractérisé en ce que** la couche intermédiaire élastique (5) est vulcanisée ou collée ou soudée ou pulvérisée d'une part sur la coquille extérieure respective (4) et d'autre part sur la coquille intérieure respective (6).

5. Palier de fixation selon l'une quelconque des revendications 1 à 4, **caractérisé en ce que** les coquilles intérieures (6) et/ou les coquilles extérieures (4) sont réalisées en aluminium.

6. Palier de fixation selon l'une quelconque des revendications 1 à 5, **caractérisé en ce que** les coquilles intérieures respectives (6) présentent extérieurement une rainure (16) dans la région de l'évidement (8) ouvert vers la barre anti-dévers (2).

7. Palier de fixation selon l'une quelconque des revendications 1 à 6, **caractérisé en ce que** l'élément de serrage (14) est disposé extérieurement sur les coquilles intérieures (6) dans la région de l'évidement (8) ouvert vers la barre anti-dévers (2) ou dans la rainure (16) formée à cet endroit.

8. Palier de fixation selon l'une quelconque des revendications 1 à 7, **caractérisé en ce que** l'élément de serrage (14) se présente sous la forme d'un collier (15).
